# EUROPÄISCHE PATENTANMELDUNG

(11) **EP 2 808 243 A2**
(43) Veröffentlichungstag der Anmeldung: **03.12.2014**
(21) Anmeldenummer: 14166262.7
(22) Anmeldetag: 28.04.2014
(51) Int. Cl.: B63B 35/00, B63B 1/04, B63B 1/06, E02B 17/08, B63B 35/44

(54) **Hubwasserfahrzeug mit einem Vorschiff und einem Hauptschiff**

(30) Priorität: 30.04.2013 DE 102013104377
(71) Anmelder: Rohden, Rolf, 26607 Aurich (DE)
(72) Erfinder: Rohden, Rolf, 26607 Aurich (DE)
(74) Vertreter: Weidner Stern Jeschke

(57) **Zusammenfassung**

Die Erfindung betrifft ein Hubwasserfahrzeug mit einem Vorschiff und einem Hauptschiff, wobei das Hauptschiff Hebevorrichtungen mit Hubstelzen aufweist, sodass das Hubwasserfahrzeug entlang der Hubstelzen hebbar und senkbar ist, und die Hubstelzen durch lösbar feste Hubstelzensegmente reversibel einsetzbar sind, wobei ein Blockkoeffizient des Hubwasserfahrzeugs einen Wert kleiner 0,85 oder einen Wert kleiner 0,81 oder einen Wert kleiner 0,77 oder einen Wert kleiner 0,68 oder einen Wert kleiner 0,73 oder einen Wert kleiner 0,64 oder einen Wert kleiner 0,60 aufweist.

## Beschreibung

Die Erfindung betrifft ein Hubwasserfahrzeug mit einem Vorschiff und einem Hauptschiff, wobei das Hauptschiff Hebevorrichtungen mit Hubstelzen aufweist, sodass das Hubwasserfahrzeug entlang der Hubstelzen hebbar und senkbar ist, und die Hubstelzen durch lösbar feste Hubstelzensegmente reversibel einsetzbar sind.

Hubplattformen werden auf See oder Wasser unterschiedlich eingesetzt. Insbesondere werden Off-Shore-Windenergieanlagen mit derartigen Hubplattformen aufgebaut und/oder gewartet.

Aufgrund ihrer festen sogenannten Jack-up-Beine (Hubstelzen) haben die Hubplattformen sehr ungünstige aerodynamische und hydrodynamische Eigenschaften.

Zudem weisen die Hubplattformen durch die hoch aufragenden Hubstelzen beim Transport einen äußerst ungünstigen Schwerpunkt auf. Dies führt dazu, dass lediglich geringe Transportgeschwindigkeiten realisierbar sind.

Auch ein Hochseeeinsatz ist nicht möglich, da Stürme oder Orkane auf See der Hubplattform Schaden können. Dies kann bis zum Sinken einer Hubplattform führen.

Weiterhin führen die ungünstigen aerodynamischen und hydrodynamischen Eigenschaften zu einem hohen Energiebedarf beim Transport.

Hubplattformen haben meist eine annähernd quadratische Grundfläche an deren Ecken die Hubstelzen angeordnet sind. Dies führt dazu, dass derartige Hubplattformen einen Blockkoeffizienten von annähernd 1 aufweisen. Moderne Transportschiffe haben aufgrund ihrer stromlinienförmigen Ausgestaltung meist einen Blockkoeffizienten von 0,7 oder weniger.

Durch den quadratischen Aufbau der Plattform und dem Aktionsraum eines Krans stehen Mannschaftsquartiere und Arbeitsräume nur eingeschränkt zur Verfügung. Zudem werden bei Sturmgefahr die Mannschaften via Helikopter ausgeflogen. Dies führt zu hohen Kosten für Infrastruktur und Betrieb.

Das Lagern und Transportieren von Ersatzteilen für Windenergieanlagen, wie beispielsweise Rotorblätter, kann auf Hubplattformen nur eingeschränkt erfolgen. Im Regelfall werden derartige Ersatzteile mit separaten Schiffen an die Hubplattform herangeführt.

Um gewisse Aspekte der vorhergehenden Nachteile zu reduzieren, wurde im Stand der Technik ein Vorschiff mit einer Bugwulst an eine solche Hubplattform angeflanscht oder entsprechend angesetzt. Dabei musste das Vorschiff sehr kurz im Vergleich zu einer Länge der Hubplattform ausgestaltet sein, da durch die zusätzliche Masse des Vorschiffs die Hubeigenschaften vermindert waren.

Dies hat dazu geführt, dass Hubplattformen mit angesetztem Vorschiff einen Blockkoeffizienten von ca. 0,9 aufwiesen und bei Fahrtgeschwindigkeiten von spätestens 15kn ein Strömungsabriss an den Schultern des Rumpfs erfolgte. Zudem sind immer noch keine Hochseetauglichkeit und Lager- und Transportmöglichkeit für Rotorblätter oder dgl. gewährleistet.

Aufgabe ist es, den Stand der Technik zu verbessern.

Gelöst wird diese Aufgabe durch ein Hubwasserfahrzeug mit einem Vorschiff und einem Hauptschiff, wobei das Hauptschiff Hebevorrichtungen mit Hubstelzen aufweist, sodass das Hubwasserfahrzeug entlang der Hubstelzen hebbar und senkbar ist, und die Hubstelzen durch lösbar feste Hubstelzensegmente reversibel einsetzbar sind, wobei ein Blockkoeffizient des Hubwasserfahrzeugs einen Wert kleiner 0,85 oder einen Wert kleiner 0,81 oder einen Wert kleiner 0,77 oder einen Wert kleiner 0,68 oder einen Wert kleiner 0,73 oder einen Wert kleiner 0,64 oder einen Wert kleiner 0,60 aufweist.

Alternativ wird die Aufgabe gelöst durch ein Hubwasserfahrzeug mit einem Vorschiff und einem Hauptschiff, wobei das Hauptschiff Hebevorrichtungen mit Hubstelzen aufweist, sodass das Hubwasserfahrzeug entlang der Hubstelzen hebbar und senkbar ist, und die Hubstelzen durch lösbar feste Hubstelzensegmente reversibel einsetzbar sind, wobei ein Schiffsbreiten-zu-Schiffslängen-Verhältnis einen Wert kleiner 0,38 oder einen Wert kleiner 0,35 oder einen Wert kleiner 0,30 oder einen Wert kleiner 0,28 oder einen Wert kleiner 0,25 oder einen Wert kleiner 0,23 oder einen Wert kleiner 0,21 aufweist.

In einer weiteren Alternativen wird die Aufgabe gelöst durch ein Hubwasserfahrzeug mit einem Vorschiff und einem Hauptschiff, wobei das Hauptschiff Hebevorrichtungen mit Hubstelzen aufweist, sodass das Hubwasserfahrzeug entlang der Hubstelzen hebbar und senkbar ist, und die Hubstelzen durch lösbar feste Hubstelzensegmente reversibel einsetzbar sind, wobei ein Vorschiffslängen-zu-Hauptschiffslängen-Verhältnis einen Wert größer 0,20 oder einen Wert größer 0,23 oder einen Wert größer 0,26 oder einen Wert größer 0,30 oder einen Wert größer 0,33 aufweist.

Weiterhin wird in einer Alternativen die Aufgabe gelöst durch ein Hubwasserfahrzeug mit einem Vorschiff und einem Hauptschiff, wobei das Hauptschiff Hebevorrichtungen mit Hubstelzen aufweist, sodass das Hubwasserfahrzeug entlang der Hubstelzen hebbar und senkbar ist, und die Hubstelzen durch lösbar feste Hubstelzensegmente reversibel einsetzbar sind, wobei ein Hubwasserfahrzeugrumpf derart ausgestaltet ist, dass bei einer Hubwasserfahrzeuggeschwindigkeit von mehr als 16kn, insbesondere von mehr als 18kn oder 20kn, ein Strömungsabriss an einer Schulter des Hubwasserfahrzeugrumpfs unterbleibt.

Erfindungsgemäße Hubwasserfahrzeuge sämtlicher beschriebenen Ausgestaltungen beseitigen die vorgenannten Nachteile des Standes der Technik. So kann ein Multi-Purpose-Schiff bereitgestellt werden, welches hochseetauglich ist. Zudem können Ersatzteile gelagert werden, sodass eine gesonderte Anlieferung durch ein weiteres Versorgungs-Schiff unterbleiben kann. Weiterhin kann das Schiff auch in einem Sturm betrieben werden, sodass die Mannschaften nicht separat aus- und anschließend wieder eingeflogen werden müssen. Es ist der Energiebedarf eines solchen Multi-Purpose-Schiffes gegenüber den Hubplattformen des Standes der Technik erheblich reduziert, da auch bei höheren Geschwindigkeiten durch einen optimierten Schiffsrumpf kein Strömungsabriss an den Schultern des Rumpfes erfolgt.

Ein "Hubwasserfahrzeug" ist im Allgemeinen ein Wasserfahrzeug (Multi-Purpose-Schiff), welches Hubstelzen aufweist, welche vertikal verfahrbar sind und nach einem Kontakt mit dem Seeboden das Hubwasserfahrzeug über eine Wasserlinie hebt. Durch dieses Anheben kann das Hubwasserfahrzeug einen festen Stand ausbilden.

Vorliegend wird als "Vorschiff" der Teil des Hubwasserfahrzeugs verstanden, welcher den Bug des Wasserfahrzeugs mitbildet. Praktisch läuft der Rumpf unterhalb des Vorschiffs zum Bugwulst zusammen. Zudem entspricht das Vorschiff insbesondere dem Teil der sich in üblicher Fahrtrichtung des Hubwasserfahrzeugs nach den hinteren Hubstelzen (aus Sichtrichtung des Hecks) erstreckt.

Das "Hauptschiff" umfasst insbesondere den Teil des Hubwasserfahrzeugs, welcher (aus Sichtrichtung Heck) vor dem Vorschiff angeordnet ist. Zudem kann das Hauptschiff sämtliche Einrichtungen üblicher aus dem Stand der Technik bekannter Hubplattformen aufweisen. So sind beispielsweise die Hubvorrichtungen mit den Hubstelzen auf dem Hauptschiff angeordnet.

Die "Hebevorrichtung" bewirkt im Zusammenspiel mit den "Hubstelzen" ein vertikales Verfahren des Hubschiffs, sodass das Hubschiff über die Wasserlinie angehoben werden kann. Insbesondere weist die Hubvorrichtung eine Beförderungseinrichtung mit einem Motor auf, welche in die Hubstelzen eingreift und in vertikaler Richtung befördert.

Die vorliegenden "Hubstelzen" werden durch "lösbar feste Hubstelzensegmente" gebildet. Die Hubstelzen werden erst bei Bedarf zusammengesetzt. Somit gibt es während einer Fahrt keine aerodynamisch ungünstige Aufbauten. Erst vor Ort werden die Hubstelzen errichtet und ein Heben des Hubwasserfahrzeugs kann erfolgen. Nach dem der Einsatz beendet ist, können die Hubstelzen wieder in die einzelnen Hubstelzensegmente zerlegt werden. Bei einem erneuten Einsatz werden wiederum die Hubstelzensegmente zu den Hubstelzen zusammengesetzt, sodass eine Reversibilität gewährleistet werden kann.

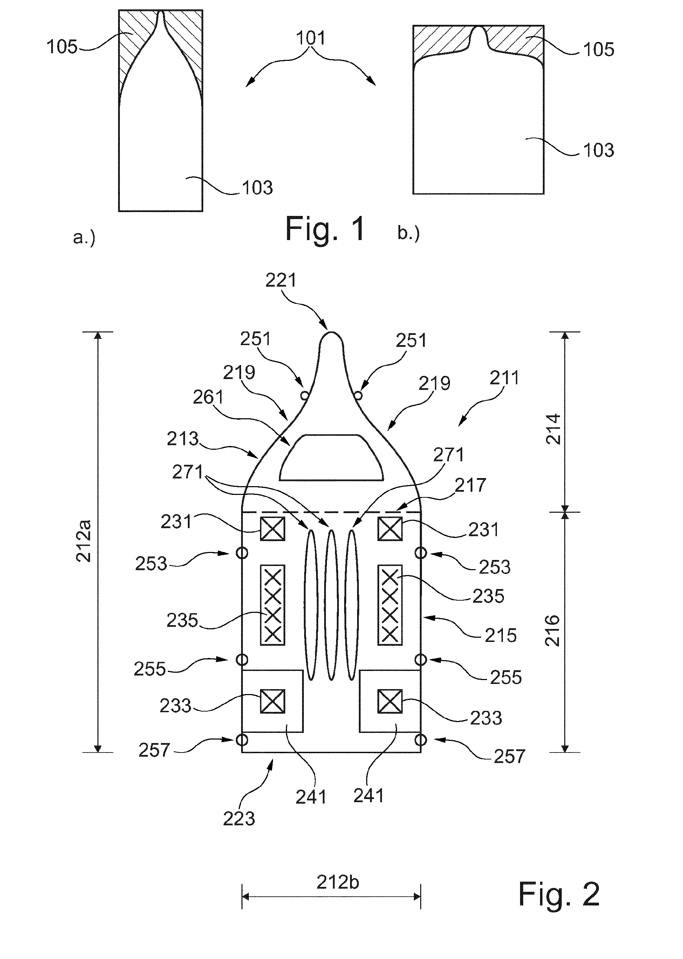

Unter dem "Blockkoeffizient", auch als Völligkeitsgrad (kurz auch Völligkeit) bezeichnet, wird vorliegend insbesondere das Verhältnis einer beliebig geformten Fläche 103 zur Fläche des umschreibenden Rechtecks 101 verstanden (siehe Fig. 1). Vorliegend bezeichnet der Blockkoeffizient insbesondere die sogenannte Wasserlinienvölligkeit als Verhältnis der Wasserlinienfläche zu der Fläche aus Länge des Schiffes und Breite des Schiffes, jeweils gemessen in der Wasserlinie. Der Blockkoeffizient dient insbesondere im Schiffsentwurf als Ausgangsbasis für die Ermittlung der gewünschten Kombination aus Geschwindigkeit, Tragfähigkeit und erforderlicher Antriebsleistung des Schiffes.

Als "Schiffsbreite" wird insbesondere der maximale Abstandswert gegenüberliegender Steuerbord- und Backbordpunkte oberhalb der Wasserlinie verstanden.

Als "Schiffslänge" wird insbesondere der maximale Abstandswert zwischen Bug und Heck oberhalb der Wasserlinie verstanden.

Bei dem "Schiffsbreiten-zu-Schiffslängen-Verhältnis" werden die Abstandswerte von Schiffsbreite (Zähler) und Schiffslänge (Nenner) dividiert, wobei die gleichen Einheiten z.B. Meter oder Zentimeter für die Schiffsbreite und die Schiffslänge verwendet werden.

Eine "Vorschiffslänge" ist der maximale Längenwert des Vorschiffs und wird insbesondere entlang einer Schiffsmittellinie gemessen.

Die "Hauptschiffslänge" ist der maximale Längenwert des Hauptschiffs und wird insbesondere entlang einer Schiffsmittellinie gemessen. Vorschiffslänge und Hauptschiffslänge werden insbesondere auf gleicher horizontaler Höhe bestimmt.

Bei dem "Vorschiffslängen-zu-Hauptschiffslängen-Verhältnis" werden die Längenwerte von Vorschiff (Zähler) und von Hauptschiff (Nenner) dividiert, wobei die gleichen Einheiten z.B. Meter oder Zentimeter für die jeweiligen Längenwerte verwendet werden.

Unter "Strömungsabriss" wird vorliegend die Ablösung der Wasserströmung von der Oberfläche des Rumpfes des Hubwasserfahrzeugs verstanden, wobei dies insbesondere an den Schultern des Rumpfes erfolgen kann. Dabei kann es sich gleichermaßen um die Ablösung einer laminaren als auch einer turbulenten Strömung handeln.

Als "Schulter des Hubwasserfahrzeugrumpfs" wird vorliegend insbesondere der Bereich um den Schulterpunkt des Rumpfes verstanden, bei dem erstmalig der Steuerbordrumpf und der Backbordrumpf nicht mehr parallel verlaufen, sondern sich Steuerbordrumpf und Backbordrumpf aufeinander zubewegen, um im Endpunkt den Bug des Hubwasserfahrzeugrumpfs zu bilden. Die Schulter umfasst dabei nicht nur den Schulterpunkt selbst, sondern den Bereich bis zu zwei Meter vor und nach dem eigentlichen Schulterpunkt.

In einer weiteren Ausführungsform umfasst das Hubwasserfahrzeug eine Trägerstruktur, welche das Vorschiff mit dem Hauptschiff verbindet und über welche Kräfte vom Vorschiff an das Hauptschiff ableitbar sind.

Die Verwendung dieser Trägerstruktur ist insbesondere deshalb vorteilhaft, da so die Kräfte, welche aufgrund des Vorschiffs auf die Hubstelzen wirken, besonders effektiv an das Hauptschiff abgeleitet werden können.

Zudem muss dass Schiff nicht durch dickere Seitenwände stabilisiert werden, sondern es können Kräfte durch einen erhöhten Aufbau des Vorschiffs an das Hauptschiff abgeleitet werden.

Dies ist eine Möglichkeit um ein Hubwasserfahrzeug bereitzustellen, welches eine größere Länge des Vorschiffs erlaubt und somit den Blockkoeffizient herabsetzt oder eine hydrodynamisch sinnvolle Form des Bugs erst ermöglicht.

Die "Trägerstruktur" kann insbesondere sowohl Druckals auch Zugkräfte aufnehmen. In seiner einfachsten Form ist die Trägerstruktur als Balken ausgebildet, welcher vom Vorschiff bis zum Hauptschiff ragt. Auch Seilstrukturen mit einem gespannten Drahtseil oder mehreren gespannten Drahtseilen ist verwendbar. Zudem kann die Reling zusätzlich als Trägerstruktur dienen. Auch schräge Verläufe, welche beispielsweise am Bug 15m über Deck beginnen und entlang der Reling sich zum Hauptdeck erstrecken und dabei lediglich auf Höhe des Decks enden sind umsetzbar.

Vorliegend werden unter dem Begriff "Kräfte" insbesondere Gewichtskräfte verstanden, welche das (schwere) Vorschiff aufgrund seiner Masse erzeugt. Aber auch Verwindungskräfte aufgrund von Torsion oder dgl. sind mit umfasst.

Um unterschiedliche Möglichkeiten zur Kraftableitung bereitzustellen, kann die Trägerstruktur zwischen einem Vorschiffansatzpunkt und einem Hauptschiffansatzpunkt einen Trägerwinkel gegenüber einer Horizontalen aufweisen und der Trägerwinkel einen Winkelwert zwischen 90° und 0° oder einen Winkelwert zwischen 80° und 10° oder einen Winkelwert zwischen 70° und 30° oder einen Winkelwert zwischen 60° und 45° aufweisen.

Der "Vorschiffansatzpunkt" ist der höchste Punkt der Trägerstruktur am Vorschiff und befindet sich insbesondere direkt oberhalb des Bugs.

Der "Hauptschiffansatzpunkt" ist der Punkt am Hauptschiff, an dem die Kräfte letztendlich in das Hauptschiff abgeleitet werden. Dies ist insbesondere der tiefste, hauptschiffseitige äußerste Punkt der Trägerstruktur.

Als "Trägerwinkel" wird insbesondere der kleinste Winkel verstanden, welcher sich durch eine gedachte Gerade zwischen Vorschiffansatzpunkt und Hauptschiffansatzpunkt gegenüber einer Horizontalen ergibt.

Die "Horizontale" ist eine gedachte Ebene, welche mathematisch einer parallelen Ebene zu einer idealen ruhigen Wasserfläche entspricht.

In einer weiteren Ausprägungsform ist der Hauptschiffansatzpunkt an einem beliebigen Punkt an einer Backbordseite und/oder Steuerbordseite des Hauptschiffs angeordnet.

Ein "beliebigen Punkt" ist insbesondere jede Position zwischen Heck des Hubwasserfahrzeugs und dem bugseitigen Ende des Hauptschiffs.

Als "Backbordseite" ist insbesondere der Bereich zwischen einer backbordseitigen Außenwand des Rumpfes des Hauptschiffs und dem Beginn der Hubvorrichtung zu verstehen.

Als "Steuerbordseite" ist insbesondere der Bereich zwischen einer backbordseitigen Außenwand des Rumpfes des Hauptschiffs und dem Beginn der Hubvorrichtung zu verstehen.

Um einen Arbeitsbereich des Hauptschiffs für Kräne nicht einzuschränken, kann der Hauptschiffansatzpunkt in Höhe der bugseitigen Hubvorrichtung oder der bugseitigen Hubvorrichtungen angeordnet sein. In diesem Fall kann die Trägerstruktur besonders steil (Trägerwinkel > 75°) ausgestaltet sein.

Unter "bugseitigen Hubvorrichtungen" sind die Hubvorrichtungen zu verstehen, welche aus einer Sichtrichtung des Hecks am nächsten zum Bug angeordnet sind.

In einer weiteren Ausgestaltungsform kann die Trägerstruktur als eine Wand und/oder als Strebe und oder als Streben ausgebildet sein, wobei insbesondere die Strebe, die Streben und/oder die Wand eine lineare oder gebogene Kontur aufweisen.

Als "Wand" werden insbesondere flächige Strukturen verstanden, welche dennoch Öffnungen aufweisen können. So werden vorliegend auch Gitterstrukturen als Wand bezeichnet.

Mit "Strebe" sind insbesondere Trägerbalken oder Seile umfasst.

Eine "lineare Kontur" kann beispielsweise durch einen Balken realisiert werden. Linear bezieht sich insbesondere auf die Struktur, welches sich durch eine Seitenansicht von Backbord oder Steuerbord ergibt. Mit "gebogene Kontur" sind alle von der linearen Kontur abweichenden Formen gemeint. Insbesondere sind Strukturen der Form eines Parabelastes mit umfasst, wobei sich diese Struktur durch eine Seitenansicht von Backbord oder Steuerbord ergibt.

Um sowohl die Hubstelzensegmente zu einer Hubstelze zusammenzufügen und/oder um gelagerte Bauteile zu transportieren, kann an einer der Hebevorrichtungen ein Kran angeordnet sein.

Ein "Kran" umfasst eine, manuell oder durch Motoren betriebene, Einrichtung zur vertikalen und horizontalen Verladung von Lasten.

In einer weiteren Ausführungsform weist ein Bug des Vorschiffs eine verschließbare Öffnung auf, wobei die Öffnung über einen verzweigten Kanal zu einer backbordseitigen und einer steuerbordseitigen Ausgangsöffnung führt, sodass ein am Bug entstehender Wellenberg zu den Wellentälern an den Ausgangsöffnungen abgeleitet wird.

Der "verzweigten Kanal" weist in einer Aufsicht von oben insbesondere die Form eines "Y" auf. Der verzweigte Kanal ist hohl ausgestaltet, sodass in seinem Inneren ein Fluid transportierbar ist.

Die "backbordseitige und steuerbordseitige Ausgangsöffnung" befindet sich im Rumpf und ist insbesondere unterhalb Wasserlinie angeordnet.

Bei Fahrt des Hubwasserfahrzeugs wird am Rumpf eine Welle erzeugt, welche am Bug ein "Wellenberg" bedingt. Dieser Wellenberg ist der Teil der Welle, welcher oberhalb eines Ruhewasserspiegels liegt.

Die "Wellentäler" sind ebenfalls durch die erzeugte Welle bedingt und bilden sich sowohl steuerbordseitig als auch backbordseitig am Rumpf unterhalb des Ruhewasserspiegels.

Um während der Fahrt unabhängig vom Schiffsmotor elektrische Energie zu erzeugen, kann in dem verzweigten Kanal eine elektrische Maschine oder können zwei elektrische Maschinen angeordnet sein, über welche in einem generatorischen Betrieb elektrische Energie erzeugbar ist und über welche in einem motorischen Betrieb ein Zusatzquerstrahlruder realisierbar ist. Durch das zusätzliche Querstrahlruder ist das Hubwasserfahrzeug besonders manövrierfähig. Die Querstrahlruderfunktion wird insbesondere dadurch erreicht, dass die einzelnen Kanalabschnitte verschlossen werden können.

In einer weiteren Ausgestaltungsform weist das Hubwasserfahrzeug ein Querstrahlruder auf. Durch dieses klassische Querstrahlruder kann die Querstrahlruderfunktionalität noch zusätzlich verbessert werden.

Damit insbesondere die Mannschaften auch bei einem Sturm oder Orkan an Bord bleiben können, kann das Vorschiff Aufbauten aufweisen, welche die Kommandobrücke und Aufenthalts-, Arbeits- und Wohnräume für Mannschaften und Passagiere umfasst.

"Aufbauten", auch als Decksaufbau bezeichnet, sind insbesondere alle über das Schiffsdeck hinausragenden Gebilde. Dazu gehören insbesondere das Deckshaus mit der Kommandobrücke, aber auch Masten, Kräne und andere Be- und Entladeeinrichtungen. Es sind Aufbauten umfasst, deren Seiten durch die Außenhaut des Rumpfes gebildet werden als auch Deckshäusern, die von Wänden umgrenzt sind und nicht bis an die Außenhaut reichen.

In einer weiteren Ausführungsform weist das Hauptschiff Lagereinrichtungen für Windenergieanlagenteile und die segmentierten Hubstelzen auf. Somit kann das Hubwasserfahrzeug autarke Missionen (z.B. Wartungsmissionen oder Aufbau- und Umbaumissionen) durchführen, ohne durch zusätzliche Versorgungsschiffe mit Material versorgt zu werden.

Die "Lagereinrichtungen" können sowohl unter Deck als auch auf dem Deck angeordnet sein. Bei unter Deck befindlichen Lagereinrichtungen sind verschließbare Öffnungen vorgesehen, durch die das gelagerte Gut verfahren werden kann.

Im Weiteren wird die Erfindung anhand von Ausführungsbeispielen erläutert. Es zeigen
- Figur 1a: eine schematische Darstellung eines Blockkoeffizienten eines erfindungsgemäßen Hubwasserfahrzeugs,
- Figur 1b: eine schematische Darstellung eines Blockkoeffizienten einer Hubplattform nach dem stand der Technik,
- Figur 2: eine schematische Darstellung eines Multi-Purpose-Schiffs in einer Aufsicht von oben und

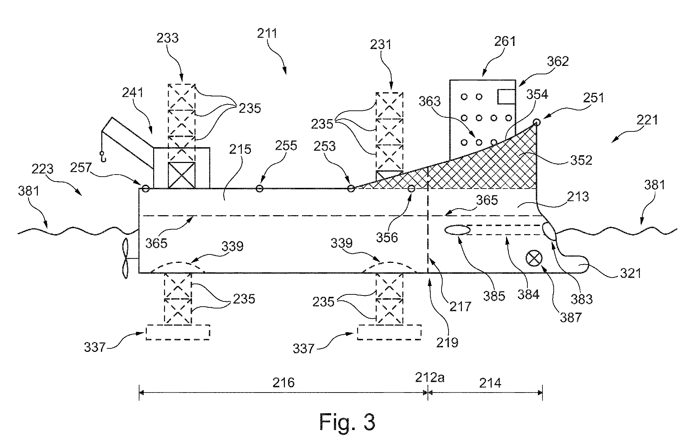

- Figur 3: eine schematische Darstellung des Multi-Purpose-Schiffs in einer Seitenansicht aus Steuerbordrichtung.

Ein Multi-Purpose-Schiff (Hubschiff) 211 weist ein Vorschiff 213 und ein Hauptschiff 215 auf. Auf dem Arbeitsdeck 365 des Hauptschiffs 215 sind an den Ecken zwei bugseitige Hubvorrichtungen mit Hubstelzen 231 und zwei heckseitige Hubvorrichtungen mit Hubstelzen 233 angeordnet. Zusätzlich ist um die heckseitigen Hubvorrichtungen und somit um die Hubstelzen 233 je ein Kran 241 angeordnet. Am Heck 223 weist das Hubschiff 211 einen Voith-Schneider-Antrieb auf, mit dem ein effektives Manövrieren erfolgt.

Mit den Kranen 241 werden einzelne am Deck befindliche Hubstelzensegmente 235 zu Hubstelzen 231, 233 zusammengesetzt. Zusätzlich sind Windenergieanlagenrotorblätter 271 an Deck gelagert. Mittels der Krane 241 werden die Windenergieanlagenrotorblätter an einem Einsatzort in ihre Position verbracht.

An das Hauptschiff 215 ist das Vorschiff 213 angeordnet. Das Vorschiff 213 weist Aufbauten 261 wie das Schiffshaus mit Kommandobrücke 362 und Kajüten 363 auf. Das Vorschiff 213 hat einen hydrodynamischen Rumpf, welcher mit dem Vorschiffrumpf von modernen Containerschiffen vergleichbar ist. Am Bug 221 des Rumpfes ist eine Bugwulst 321 angeordnet. Oberhalb dieser Bugwulst 321 ist eine verschließbare Bugöffnung 383 angeordnet, welche in einen Kanal 384 übergeht und Wellenberge am Bug 221 über die Bugöffnung 383 und dem Kanal 384 zu den an den Ausgangsöffnungen 385 Wellentälern ableitet. Zusätzlich ist an dem Rumpf des Vorschiffs 213 ein Querstrahlruder 387 unterhalb der Wasserlinie 381 angebracht.

Der Rumpf des Vorschiffs 213 weist eine bauchige Form auf, an deren Ende, beim Übergang zum Rumpf des Hauptschiffs 215, sich steuerbordseitig und bachbordseitig Rumpfschultern 219 ausbilden.

In Höhe von 15m über dem Arbeitsdeck 365 ist am Bug 221 der Vorschiffsansatzpunkt 251 angeordnet. Der Vorschiffsansatzpunkt ist der höchste Punkt der gitterförmigen Trägerwand 352. Die Trägerwand 352 verläuft geschwungen bis zum am Hauptschiff 215 angeordneten Hauptschiffsansatzpunkt 253, welcher in einer Höhe von ca. 1,5m oberhalb des Arbeitsdecks 365 angeordnet ist. Alternativ sind andere Hauptschiffsansatzpunkte 356, 255, 257 vorgesehen.

Das Hubschiff 211 hat eine Länge 212a und eine Breite 212b, wobei die Breite 212b zugleich die Breite des Hauptschiffs 215 bildet. Die Vorschiffslänge 214 und die Hauptschiffslänge 216 bilden die Hubschifflänge 212a.

Wird nun das Hubschiff 211 an seinen Einsatzort, ein Windenergieanlagenpark auf See, verbracht, werden mittels der Krane 241 die auf dem Arbeitsdeck 365 befindlichen Hubstelzensegmente 235 zu den Hubvorrichtungen transportiert und mittels lösbaren Flansch zu Hubstelzen 231, 233 zusammengefügt.

Die Hubstelzen 231, 233 weisen an ihrem unteren Ende je einen Stempel 337 für einen besseren Halt auf dem Meeresboden auf. Die Stempel 337 sind in dem Schiffsrumpf in Stempelaufnahmen 339 angeordnet. Beim vertikalen Verschieben der Hubstelzen 231, 233 durch die Hubvorrichtungen werden die Stempel 337 in Richtung Meeresboden verschoben. Nach einem Kontakt mit dem Meeresboden erfolgt ein weiteres Verschieben, bis das gesamte Hubschiff 211 oberhalb der Wasserlinie 381 angehoben wurde.

Anschließend werden die Windenergieanlagenrotorblätter 271 vom Arbeitsdeck 365 mittels der Krane 241 an eine Nabe eines Windenergieanlagenhauses angeflanscht. Zudem werden Wartungs- und Reparaturarbeiten an der Windenergieanlage durchgeführt. Nach Abschluss der Arbeiten, wird das Hubschiff 211 wiederum vertikal in Richtung Wasserlinie 381 verschoben und jeweils die einzelnen Hubstelzensegmente vereinzelt und mittels der Krane 241 wieder an ihrem ursprünglichen Platz auf dem Arbeitsdeck 365 verbracht. Sobald das Schiff auf dem Wasser abgesetzt ist, wird der neue Einsatzort angefahren.

### Bezugszeichenliste

- 101: Blockkoeffizientendarstellung
- 103: Wasserfahrzeugfläche an einer Wasserlinie
- 105: Restfläche
- 211: Hubschiff
- 212a: Länge Hubschiff
- 212b: Breite Hubschiff
- 213: Vorschiff
- 214: Länge des Vorschiffs
- 215: Hauptschiff
- 216: Länge Hauptschiff
- 217: Trennlinie zwischen Vor- und Hauptschiff
- 219: Rumpfschulter
- 221: Bug
- 223: Heck
- 231: bugseitige Hubstelzen in Hubvorrichtung
- 233: heckseitige Hubstelzen in Hubvorrichtung
- 235: Hubstelzensegmente
- 241: Kran
- 251: Vorschiffansatzpunkt
- 253: Hauptschiffansatzpunkt
- 255: erste Hauptschiffsansatzpunktalternative
- 257: zweite Hauptschiffsansatzpunktalternative
- 261: Aufbauten
- 271: Windenergieanlagenrotorblätter
- 321: Bugwulst
- 337: Stempel
- 339: Stempelaufnahme
- 352: Trägerwand
- 354: Trägerkontur
- 356: weiterer Hauptschiffansatzpunkt
- 362: Kommandobrücke
- 363: Kajüten
- 365: Arbeitsdeck
- 381: Wasserlinie
- 383: Bugöffnung
- 384: Kanal
- 385: steuerbordseitige Ausgangsöffnung
- 387: Querstrahlruder

## Patentansprüche

1. Hubwasserfahrzeug (211) mit einem Vorschiff (213) und einem Hauptschiff (215), wobei das Hauptschiff Hebevorrichtungen mit Hubstelzen (231, 233) aufweist, sodass das Hubwasserfahrzeug entlang der Hubstelzen hebbar und senkbar ist, und die Hubstelzen durch lösbar feste Hubstelzensegmente (235) reversibel einsetzbar sind, **dadurch gekennzeichnet, dass** ein Blockkoeffizient des Hubwasserfahrzeugs einen Wert kleiner 0,85 oder einen Wert kleiner 0,81 oder einen Wert kleiner 0,77 oder einen Wert kleiner 0,68 oder einen Wert kleiner 0,73 oder einen Wert kleiner 0,64 oder einen Wert kleiner 0,60 aufweist.

2. Hubwasserfahrzeug mit einem Vorschiff und einem Hauptschiff, wobei das Hauptschiff Hebevorrichtungen mit Hubstelzen aufweist, sodass das Hubwasserfahrzeug entlang der Hubstelzen hebbar und senkbar ist, und die Hubstelzen durch lösbar feste Hubstelzensegmente reversibel einsetzbar sind, **dadurch gekennzeichnet, dass** ein Schiffsbreiten (212b) -zu- Schiffslängen (212a)-Verhältnis einen Wert kleiner 0,38 oder einen Wert kleiner 0,35 oder einen Wert kleiner 0,30 oder einen Wert kleiner 0,28 oder einen Wert kleiner 0,25 oder einen Wert kleiner 0,23 oder einen Wert kleiner 0,21 aufweist.

3. Hubwasserfahrzeug mit einem Vorschiff und einem Hauptschiff, wobei das Hauptschiff Hebevorrichtungen mit Hubstelzen aufweist, sodass das Hubwasserfahrzeug entlang der Hubstelzen hebbar und senkbar ist, und die Hubstelzen durch lösbar feste Hubstelzensegmente reversibel einsetzbar sind, **dadurch gekennzeichnet, dass** ein Vorschiffslängen (214) -zu- Hauptschiffslängen (215)-Verhältnis einen Wert größer 0,20 oder einen Wert größer 0,23 oder einen Wert größer 0,26 oder einen Wert größer 0,30 oder einen Wert größer 0,33 aufweist.

4. Hubwasserfahrzeug mit einem Vorschiff und einem Hauptschiff, wobei das Hauptschiff Hebevorrichtungen mit Hubstelzen aufweist, sodass das Hubwasserfahrzeug entlang der Hubstelzen hebbar und senkbar ist, und die Hubstelzen durch lösbar feste Hubstelzensegmente reversibel einsetzbar sind, **dadurch gekennzeichnet, dass** ein Hubwasserfahrzeugrumpf derart ausgestaltet ist, dass bei einer Hubwasserfahrzeuggeschwindigkeit von mehr als 16kn, insbesondere von mehr als 18kn oder 20kn, ein Strömungsabriss an einer Schulter (219) des Hubwasserfahrzeugrumpfs unterbleibt.

5. Hubwasserfahrzeug nach einem der vorherigen Ansprüche, **gekennzeichnet durch** einen Trägerstruktur (352), welche das Vorschiff mit dem Hauptschiff verbindet und über welche Kräfte vom Vorschiff an das Hauptschiff ableitbar sind.

6. Hubwasserfahrzeug nach Anspruch 5, **dadurch gekennzeichnet, dass** die Trägerstruktur zwischen einem Vorschiffansatzpunkt (251) und einem Hauptschiffansatzpunkt (253, 255, 257, 356) einen Trägerwinkel gegenüber einer Horizontalen aufweist und der Trägerwinkel einen Winkelwert zwischen 90° und 0° oder einen Winkelwert zwischen 80° und 10° oder einen Winkelwert zwischen 70° und 30° oder einen Winkelwert zwischen 60° und 45° aufweist.

7. Hubwasserfahrzeug nach einem der Ansprüche 5 oder 6, **dadurch gekennzeichnet, dass** der Hauptschiffansatzpunkt an einem beliebigen Punkt an einer Backbordseite und/oder Steuerbordseite des Hauptschiffs angeordnet ist.

8. Hubwasserfahrzeug nach einem der Ansprüche 5 bis 7, **dadurch gekennzeichnet, dass** der Hauptschiffansatzpunkt in Höhe der bugseitigen Hubvorrichtung oder der bugseitigen Hubvorrichtungen angeordnet ist.

9. Hubwasserfahrzeug nach einem der Ansprüche 5 bis 8, **dadurch gekennzeichnet, dass** die Trägerstruktur als eine Wand und/oder als Strebe und oder als Streben ausgebildet ist, wobei insbesondere die Strebe, die Streben und/oder die Wand eine lineare oder gebogene Kontur (354) aufweisen.

10. Hubwasserfahrzeug nach einem der vorherigen Ansprüche, **dadurch gekennzeichnet, dass** an einer der Hebevorrichtungen ein Kran (241) angeordnet ist.

11. Hubwasserfahrzeug nach einem der vorherigen Ansprüche, **dadurch gekennzeichnet, dass** ein Bug (221) des Vorschiffs eine verschließbare Öffnung (383) aufweist und die Öffnung über einen verzweigten Kanal (384) zu einer backbordseitigen und einer steuerbordseitigen Ausgangsöffnung (385) führt, sodass ein am Bug entstehender Wellenberg zu den Wellentälern an den Ausgangsöffnungen abgeleitet wird.

12. Hubwasserfahrzeug nach Anspruch 11, **dadurch gekennzeichnet, dass** in dem verzweigten Kanal eine elektrische Maschine oder zwei elektrische Maschinen angeordnet sind, über welche in einem generatorischen Betrieb elektrische Energie erzeugbar ist und über welche in einem motorischen Betrieb ein Zusatzquerstrahlruder realisierbar ist.

13. Hubwasserfahrzeug nach einem der vorherigen Ansprüche, **gekennzeichnet durch** ein Querstrahlruder (387).

14. Hubwasserfahrzeug nach einem der vorherigen Ansprüche, **dadurch gekennzeichnet, dass** das Vorschiff Aufbauten (261) aufweist, welche eine Kommandobrücke (362) und Aufenthalts-, Arbeits- und Wohnräume (363) für Mannschaften und Passagiere umfasst.

15. Hubwasserfahrzeug nach einem der vorherigen Ansprüche, **dadurch gekennzeichnet, dass** das Hauptschiff Lagereinrichtungen für Windenergieanlagenteile (271) und die segmentierten Hubstelzen (235) aufweist.
